# EUROPEAN PATENT APPLICATION

(11) **EP 3 453 732 A1**
(43) Date of publication of application: **13.03.2019**
(21) Application number: 17792754.8
(22) Date of filing: 01.05.2017
(51) Int. Cl.: C08G 73/10

(54) **POLYIMIDE RESIN**

(30) Priority: 06.05.2016 JP 2016093246
(71) Applicant: Mitsubishi Gas Chemical Company, Inc., Tokyo 100-8324 (JP)
(72) Inventor: ABIKO, Yohei, Hiratsuka-shi Kanagawa 254-0016 (JP); SUENAGA, Shuya, Hiratsuka-shi Kanagawa 254-0016 (JP); SEKIGUCHI, Shinji, Hiratsuka-shi Kanagawa 254-0016 (JP)
(74) Representative: Hoffmann Eitle
(86) International application number: PCT/JP2017/017111
(87) International publication number: WO 2017/191822

(57) **Abstract**

A polyimide resin including a structural unit A derived from a tetracarboxylic dianhydride and a structural unit B derived from a diamine compound, wherein the structural unit A includes at least one of a structural unit (A-1) derived from a compound represented by the following formula (a-1), a structural unit (A-2) derived from a compound represented by the following formula (a-2), and a structural unit (A-3) derived from a compound represented by the following formula (a-3), the structural unit B comprises a structural unit (B-1) derived from a compound represented by the following formula (b-1), a proportion of the structural unit (B-1) in the structural unit B is 60 mol% or more, and the polyimide resin has a glass transition temperature of higher than 410°C: 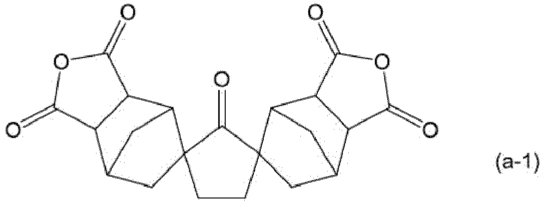 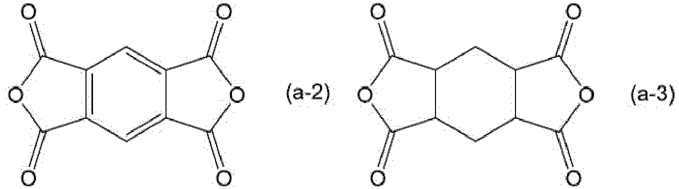 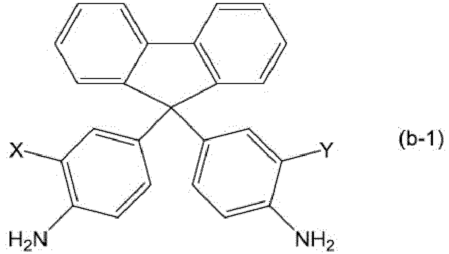 wherein X and Y in the formula (b-1) each independently are a hydrogen atom, a methyl group, a chlorine atom, or a fluorine atom.

## Description

### Technical Field

The present invention relates to a polyimide resin.

### Background Art

In liquid crystal displays and organoelectroluminescence displays, a thin film transistor (TFT) is used as a picture element switching device. Polycrystalline silicon (polysilicon) having excellent crystallinity has an electron mobility of about 0.01 m²/Vs, which is higher than that of amorphous silicon by two digits, and therefore can remarkably improve the TFT characteristics. If a polysilicon film having a high electron mobility can be formed on a plastic flexible substrate, a driving circuit and a control circuit could be unified, making it possible to realize a "sheet computer" having high value added such that the display panel has various functions.

Methods for forming a polysilicon film include an excimer laser annealing (ELA) method. In a process using this method, a substrate is exposed to a high temperature state as high as 450°C in a dehydrogenation treatment for amorphous silicon. For this reason, when this process is conducted for a plastic flexible substrate, the substrate is required to have very high heat resistance. As a resin having such high heat resistance, a polyimide resin is promising. The polyimide resin has been known to have a high glass transition temperature, but the known glass transition temperature of the polyimide resin is at highest 409°C (Example 4 of PTL 1) or 410°C (Reference Example 7 of PTL 2).

### Citation List

### Patent Literature

PTL 1: WO2013/021942
PTL 2: WO2013/069725

### Summary of Invention

### Technical Problem

These polyimide resins exhibit a very high glass transition temperature, but, in view of the application to the above-mentioned process using an excimer laser annealing (ELA) method, a polyimide resin having an even higher glass transition temperature is demanded. However, at present a polyimide resin having a glass transition temperature of higher than 410°C has not been known.

Accordingly, an object of the present invention is to provide a polyimide resin having a high glass transition temperature.

### Solution to Problem

The present inventors have found that a polyimide resin including specific structural units can achieve the above-mentioned object, thereby completing the present invention.

Specifically, the present invention is a polyimide resin including a structural unit A derived from a tetracarboxylic dianhydride and a structural unit B derived from a diamine compound, wherein the structural unit A includes at least one of a structural unit (A-1) derived from a compound represented by the following formula (a-1), a structural unit (A-2) derived from a compound represented by the following formula (a-2), and a structural unit (A-3) derived from a compound represented by the following formula (a-3), the structural unit B includes a structural unit (B-1) derived from a compound represented by the following formula (b-1), a proportion of the structural unit (B-1) in the structural unit B is 60 mol% or more, and the polyimide resin has a glass transition temperature of higher than 410°C.

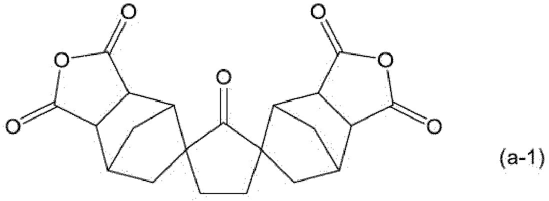

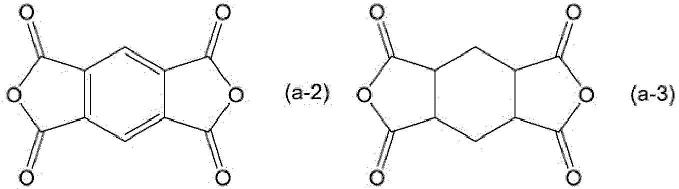

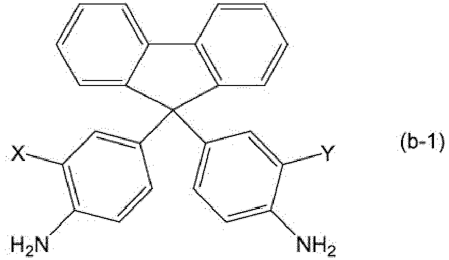

In the formula (b-1), X and Y each independently are a hydrogen atom, a methyl group, a chlorine atom, or a fluorine atom.

### Advantageous Effects of Invention

According to the present invention, there can be provided a polyimide resin having a high glass transition temperature and giving a polyimide film exhibiting high heat resistance.

Further, according to an embodiment of the present invention, there can be provided a polyimide resin giving a polyimide film exhibiting not only high heat resistance but also high transparency.

Furthermore, according to another embodiment of the present invention, there can be provided a polyimide resin gibing a polyimide film exhibiting not only high heat resistance but also high colorlessness and transparency.

### Description of Embodiments

The polyimide resin of the present invention includes a structural unit A derived from a tetracarboxylic dianhydride and a structural unit B derived from a diamine compound. The structural unit A includes at least one of a structural unit (A-1) derived from a compound represented by the following formula (a-1), a structural unit (A-2) derived from a compound represented by the following formula (a-2), and a structural unit (A-3) derived from a compound represented by the following formula (a-3).

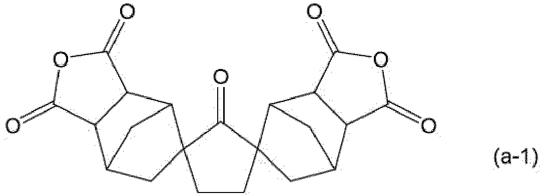

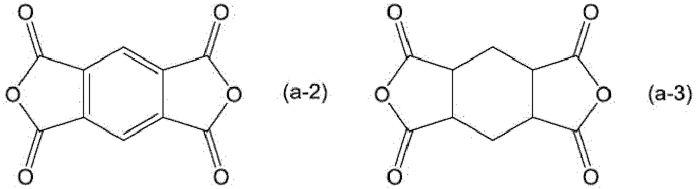

The structural unit (A-1) is preferred in view of the transparency, the colorlessness and transparency, and the heat resistance, the structural unit (A-2) is preferred in view of the heat resistance, and the structural unit (A-3) is preferred in view of the transparency, and the colorlessness and transparency.

The total content of the structural units (A-1) to (A-3) in the structural unit A is preferably 50 mol% or more, more preferably 70 mol% or more, further preferably 85 mol% or more, especially preferably 99 mol% or more, most preferably 100 mol%.

The structural unit A may further include a structural unit (A-4) derived from a compound represented by the following formula (a-4). The further inclusion of the structural unit (A-4) can improve tensile strength and tensile modulus of the polyimide film.

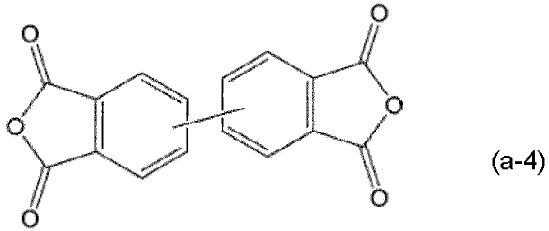

Examples of the structural units (A-4) include a structural unit (A-4-1) derived from 3,3',4,4'-BPDA (s-BPDA) represented by the following formula (a-4-1), a structural unit (A-4-2) derived from 2,3,3',4'-BPDA (a-BPDA) represented by the following formula (a-4-2), and a structural unit (A-4-3) derived from 2,2',3,3'-BPDA (i-BPDA) represented by the following formula (a-4-3).

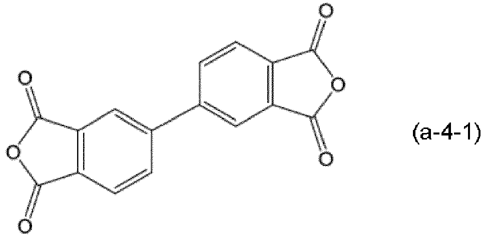

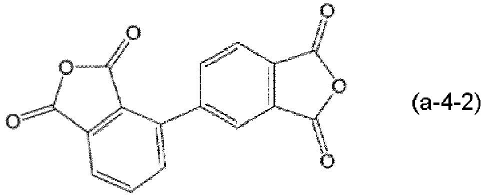

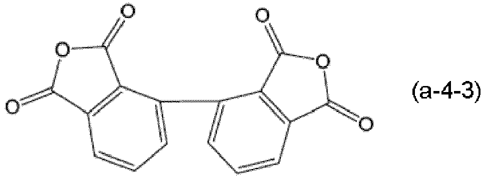

When the structural unit A further includes the structural unit (A-4), the proportion of the structural unit (A-4) in the structural unit A is preferably 50 mol% or less, more preferably 30 mol% or less. The lower limit of the proportion of the structural unit (A-4) in the structural unit A is not particularly limited and, accordingly, the proportion of the structural unit (A-4) only have to be more than 0 mol%.

The total content of the structural units (A-1) to (A-4) in the structural unit A is preferably more than 50 mol%, more preferably 70 mol% or more, further preferably 85 mol% or more, especially preferably 99 mol% or more, most preferably 100 mol%.

The structural unit B derived from a diamine compound includes a structural unit (B-1) derived from a compound represented by the following formula (b-1), wherein the proportion of the structural unit (B-1) in the structural unit B is 60 mol% or more. The inclusion of the structural unit (B-1) and suppress the movement of the main chain and thereby make it possible to achieve a glass transition temperature higher than those of conventional polyimide resins.

When the proportion of the structural unit (B-1) in the structural unit B is less than 60 mol%, the rigidity of the main chain is lowered. The proportion of the structural unit (B-1) in the structural unit B is preferably 70 mol% or more, more preferably 80 mol% or more.

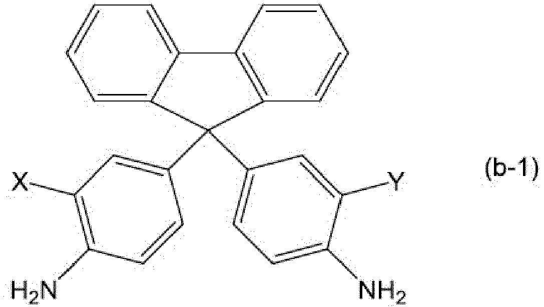

In the above formula (b-1), X and Y each independently are a hydrogen atom, a methyl group, a chlorine atom, or a fluorine atom. It is preferred that X and Y in the above formula are the same, and it is more preferred that both X and Y are a hydrogen atom.

The structural unit B preferably further includes a structural unit (B-2) derived from a compound represented by the following formula (b-2). The further inclusion of the structural unit (B-2) can give a polyimide film having high strength.

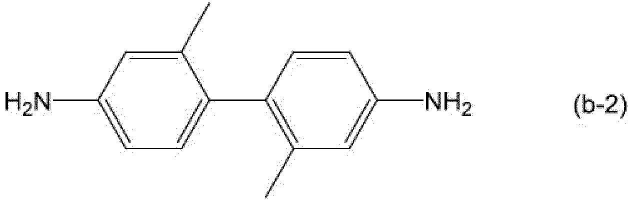

When the structural unit B further includes the structural unit (B-2), the proportion of the structural unit (B-2) in the structural unit B is preferably 40 mol% or less, more preferably 20 mol% or less. The lower limit of the proportion of the structural unit (B-2) in the structural unit B is not particularly limited and, accordingly, the proportion of the structural unit (B-2) only have to be more than 0 mol%. For imparting high strength to a polyimide film obtained from the resin, the proportion of the structural unit (B-2) in the structural unit B is preferably 10 mol% or more, more preferably 20 mol% or more.

The total content of the structural units (B-1) and (B-2) in the structural unit B is preferably more than 60 mol%, more preferably 70 mol% or more, further preferably 85 mol% or more, especially preferably 99 mol% or more, most preferably 100 mol%.

Further, by appropriately combining the structural unit A and the structural unit B, the glass transition temperature of the polyimide resin of the present invention can be higher than 410°C. By virtue of having a glass transition temperature of higher than 410°C, the polyimide resin can be used under conditions at very high temperatures as in a process using an excimer laser annealing method, and therefore the use of the polyimide resin can be further expanded to unknown uses.

The glass transition temperature is preferably 415°C or higher, more preferably 420°C or higher, further preferably 430°C or higher, especially preferably 440°C or higher, most preferably 450°C or higher.

The polyimide resin of the present invention preferably has a number average molecular weight of 5,000 to 100,000 from the viewpoint of the mechanical strength of the polyimide film obtained therefrom. The number average molecular weight of the polyimide resin can be measured by gel permeation chromatography or the like.

The polyimide film obtained from the polyimide resin of the present invention preferably has a total light transmittance of 85% or more, more preferably 87% or more.

Further, the polyimide film obtained from the polyimide resin preferably has a yellow index (YI) of 2.0 or less, more preferably 1.8 or less. When the polyimide film obtained from the polyimide resin has a total light transmittance in the above-mentioned range and a YI in the above-mentioned range, the polyimide film can exhibit high colorlessness and transparency.

The polyimide resin of the present invention can be produced by reacting the above-mentioned specific tetracarboxylic dianhydride component with the above-mentioned specific diamine component.

The tetracarboxylic dianhydride component essentially includes at least one of a compound represented by the above formula (a-1), a compound represented by the above formula (a-2), and a compound represented by the above formula (a-3). As long as this requirement is satisfied, various other tetracarboxylic dianhydride components may be included. For example, a compound represented by the formula (a-4) may be further included. In this case, the amount of the compound represented by the formula (a-4) in the tetracarboxylic dianhydride component is preferably 50 mol% or less, more preferably 30 mol% or less. These compounds may be derivatives thereof as long as they can form their respective corresponding structural units.

Further, the diamine component essentially includes a compound represented by the formula (b-1) in such an amount that the proportion of the structural unit (B-1) derived therefrom in the structural unit B is 60 mol% or more. As long as this requirement is satisfied, various other diamine components may be included. For example, for improving the strength of the polyimide film formed from the resin, a compound represented by the formula (b-2) may be further included. In this case, the amount of the compound represented by the formula (b-2) in the diamine component is preferably 40 mol% or less, more preferably 20 mol% or less.

Examples of diamine components other than the compound represented by the formula (b-2) include bis(4-aminophenyl) sulfone, 2,2'-bis(trifluoromethyl)benzidine, 1,4-phenylenediamine, 1,3-phenylenediamine, 2,4-toluenediamine, 4,4'-diaminodiphenyl ether, 3,4'-diaminodiphenyl ether, 4,4'-diaminodiphenylmethane, 1,4-bis(4-aminophenoxy)benzene, 1,3-bis(4-aminophenoxy)benzene, 1,3-bis(3-aminophenoxy)benzene, α,α'-bis(4-aminophenyl)-1,4-diisopropylbenzene, α,α'-bis(3-aminophenyl)-1,4-diisopropylbenzene, 2,2-bis[4-(4-aminophenoxy)phenyl]propane, 4,4'-diaminodiphenyl sulfone, bis[4-(4-aminophenoxy)phenyl] sulfone, bis[4-(3-aminophenoxy)phenyl] sulfone, 2,6-diaminonaphthalene, and 1,5-diaminonaphthalene.

In producing the polyimide resin of the present invention, the ratio of the amounts of the charged tetracarboxylic dianhydride component and diamine component is preferably such that the amount of the diamine component is 0.9 to 1.1 mol relative to 1 mol of the tetracarboxylic dianhydride component.

In producing the polyimide resin of the present invention, an end-capping agent may be used in addition to the tetracarboxylic dianhydride component and diamine component. The end-capping agent is preferably monoamines or dicarboxylic acids. The amount of the charged end-capping agent to be introduced is preferably 0.0001 to 0.1 mol, especially preferably 0.001 to 0.06 mol, relative to 1 mol of the tetracarboxylic dianhydride component. With respect to the monoamine end-capping agent, for example, methylamine, ethylamine, propylamine, butylamine, benzylamine, 4-methylbenzylamine, 4-ethylbenzylamine, 4-dodecylbenzylamine, 3-methylbenzylamine, 3-ethylbenzylamine, aniline, 3-methylaniline, 4-methylaniline, and the like are recommended. Of these, benzylamine and aniline can be preferably used. With respect to the dicarboxylic acid end-capping agent, preferred are dicarboxylic acids, part of which may be cyclized. For example, phthalic acid, phthalic anhydride, 4-chlorophthalic acid, tetrafluorophthalic acid, 2,3-benzophenonedicarboxylic acid, 3,4-benzophenonedicarboxylic acid, cyclohexane-1,2-dicarboxylic acid, cyclopentane-1,2-dicarboxylic acid, 4-cyclohexene-1,2-dicarboxylic acid, and the like are recommended. Of these, phthalic acid and phthalic anhydride can be preferably used.

The method for reacting the above-mentioned tetracarboxylic dianhydride component and diamine component is not particularly limited, and known methods can be used.

As specific examples of reaction methods, there can be mentioned (1) a method in which a tetracarboxylic dianhydride component, a diamine component, and a reaction solvent are charged into a reactor and the resultant mixture is stirred at room temperature to 80°C for 0.5 to 30 hours, followed by temperature elevation, to perform an imidation reaction, (2) a method in which a diamine component and a reaction solvent are charged into a reactor to dissolve the diamine, and then a tetracarboxylic dianhydride component is charged and the resultant mixture is stirred appropriately at room temperature to 80°C for 0.5 to 30 hours, followed by temperature elevation, to perform an imidation reaction, and (3) a method in which a tetracarboxylic dianhydride component, a diamine component, and a reaction solvent are charged into a reactor and then, immediately the temperature is elevated to perform an imidation reaction.

With respect to the reaction solvent used in the production of the polyimide resin, any solvent can be used as long as it does not inhibit an imidation reaction and can dissolve therein the formed polyimide resin. Examples of reaction solvents include aprotic solvents, phenolic solvents, ether solvents, and carbonate solvents.

Specific examples of aprotic solvents include amide solvents, such as N,N-dimethylisobutylamide (DMIB), N,N-dimethylformamide, N,N-dimethylacetamide, N-methyl-2-pyrrolidone, N-methylcaprolactam, 1,3-dimethylimidazolidinone, and tetramethylurea; lactone solvents, such as γ-butyrolactone and γ-valerolactone; phosphorus-containing amide solvents, such as hexamethylphosphoric amide and hexamethylphosphine triamide; sulfur-containing solvents, such as dimethyl sulfone, dimethyl sulfoxide, and sulfolane; ketone solvents, such as acetone, cyclohexanone, and methylcyclohexanone; amine solvents, such as picoline and pyridine; and ester solvents, such as (2-methoxy-1-methylethyl) acetate.

Specific examples of phenolic solvents include phenol, o-cresol, m-cresol, p-cresol, 2,3-xylenol, 2,4-xylenol, 2,5-xylenol, 2,6-xylenol, 3,4-xylenol, and 3,5-xylenol.

Specific examples of ether solvents include 1,2-dimethoxyethane, bis(2-methoxyethyl) ether, 1,2-bis(2-methoxyethoxy)ethane, bis[2-(2-methoxyethoxy)ethyl] ether, tetrahydrofuran, and 1,4-dioxane.

Further, specific examples of carbonate solvents include diethyl carbonate, methylethyl carbonate, ethylene carbonate, and propylene carbonate.

Of the above reaction solvents, amide solvents or lactone solvents are preferred. The above-mentioned reaction solvents may be used singly or in combination of two or more thereof.

In the imidation reaction, it is preferred that the reaction is conducted while removing water formed during the production of polyimide using a Dean-Stark apparatus or the like. By performing such an operation, it is possible to further increase the degree of polymerization and imidation ratio.

In the above-mentioned imidation reaction, a known imidation catalyst can be used. Examples of imidation catalysts include basic catalysts and acid catalysts.

Examples of basic catalysts include organic basic catalysts, such as pyridine, quinoline, isoquinoline, α-picoline, β-picoline, 2,4-lutidine, 2,6-lutidine, trimethylamine, triethylamine, tripropylamine, tributylamine, imidazole, N,N-dimethylaniline, and N,N-diethylaniline, and inorganic basic catalysts, such as potassium hydroxide, sodium hydroxide, potassium carbonate, sodium carbonate, potassium hydrogencarbonate, and sodium hydrogencarbonate.

Further, examples of acid catalysts include crotonic acid, acrylic acid, trans-3-hexenoic acid, cinnamic acid, benzoic acid, methylbenzoic acid, oxybenzoic acid, terephthalic acid, benzenesulfonic acid, paratoluenesulfonic acid, and naphthalenesulfonic acid. The above-mentioned imidation catalysts may be used singly or in combination of two or more thereof.

Of the above catalysts, from the viewpoint of the handling properties, a basic catalyst is preferably used, an organic basic catalyst is more preferably used, and triethylamine is further preferably used.

When using the catalyst, from the viewpoint of the reaction rate and suppression of gelation or the like, the temperature for the imidation reaction is preferably 120 to 250°C, more preferably 160 to 200°C. Further, the reaction time is preferably 0.5 to 10 hours after the start of distilling of the water formed.

When using no catalyst, the temperature for the imidation reaction is preferably 200 to 350°C.

The polyimide resin of the present invention may be mixed with various additives to form a polyimide resin composition as long as the effects of the present invention are not impaired. Examples of additives include an antioxidant, a light stabilizer, a surfactant, a flame retardant, a plasticizer, and polymer compounds other than the above-mentioned polyimide resin.

The solid content concentration of the resin composition can be appropriately selected according to the workability upon forming a polyimide film or the like, and the solid content concentration or viscosity of the composition may be controlled by adding an organic solvent. With respect to the organic solvent, there is no particular limitation as long as it can dissolve therein the polyimide resin.

The polyimide film of the present invention includes a cured product of the above-described polyimide resin (or a resin composition including the same). Namely, the polyimide film obtained by subjecting the above-described polyimide resin (or a resin composition including the same) to imidation (curing) has high heat resistance, and may have excellent colorlessness and transparency depending on the structural unit.

The method for forming such a polyimide film is not particularly limited, and known methods can be used. For example, there can be mentioned a method in which the polyimide resin solution in the present invention including an organic solvent, or the polyimide resin composition including the polyimide resin and the above-mentioned various additives is applied or shaped into a film form, and then the organic solvent is removed.

The thickness of the above-obtained polyimide film is preferably 1 to 250 µm, and can be appropriately selected according to the use of the film or the like. When the polyimide film has a thickness of 1 to 250 µm, the polyimide film can be practically used as a self-supporting film. The thickness of the polyimide film is more preferably in the range of from 1 to 200 µm, further preferably from 5 to 100 µm.

The polyimide resin of the present invention is advantageous to the use of the resin under conditions at very high temperatures as in a process using an excimer laser annealing method, for example, an organic EL member, an optical filter, a TFT member, a flexible display member, a transparent insulating layer, and the like.

### Examples

Hereinbelow, the present invention will be described in detail with reference to the following Examples, which should not be construed as limiting the scope of the present invention.

### [Example 1]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 32.182 g (0.092 mol) of 9,9-bis(4-aminophenyl)fluorene (manufactured by JFE Chemical Corporation) as a diamine component, 51.71 g of γ-butyrolactone (manufactured by Mitsubishi Chemical Corporation) as an organic solvent, and 0.467 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 20.704 g (0.092 mol) of 1,2,4,5-cyclohexanetetracarboxylic dianhydride (manufactured by Mitsubishi Gas Chemical Company, Inc.) as a tetracarboxylic dianhydride component and 12.93 g of N,N-dimethylacetamide (manufactured by Mitsubishi Gas Chemical Company, Inc.) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 133.59 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (A) having a solid content concentration of 20% by mass.

Subsequently, the polyimide resin solution (A) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 103 µm. An FT-IR analysis made with respect to the obtained polyimide film has confirmed disappearance of the raw material peaks and appearance of a peak deriving from an imide skeleton. This polyimide film had a tensile modulus of 2.6 GPa, a tensile strength of 60 MPa, a total light transmittance of 89.8%, a transmittance of 86.0% at a wavelength of 400 nm, a transmittance of 80.8% at a wavelength of 350 nm, a YI value of 1.8, and a Tg of 437°C.

### [Example 2]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 26.444 g (0.076 mol) of 9,9-bis(4-aminophenyl)fluorene (manufactured by JFE Chemical Corporation) and 4.028 g (0.019 mol) of 2,2'-dimethylbenzidine (manufactured by Wakayama Seika Kogyo Co., Ltd.) as a diamine component, 50.68 g of γ-butyrolactone (manufactured by Mitsubishi Chemical Corporation) as an organic solvent, and 0.480 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 21.266 g (0.095 mol) of 1,2,4,5-cyclohexanetetracarboxylic dianhydride (manufactured by Mitsubishi Gas Chemical Company, Inc.) as a tetracarboxylic dianhydride component and 12.67 g of γ-butyrolactone (manufactured by Mitsubishi Chemical Corporation) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 130.31 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (B) having a solid content concentration of 20% by mass.

Subsequently, the polyimide resin solution (B) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 80 µm. An FT-IR analysis made with respect to the obtained polyimide film has confirmed disappearance of the raw material peaks and appearance of a peak deriving from an imide skeleton. This polyimide film had a tensile modulus of 2.9 GPa, a tensile strength of 102 MPa, a total light transmittance of 90.0%, a transmittance of 87.3% at a wavelength of 400 nm, a transmittance of 82.3% at a wavelength of 350 nm, a YI value of 1.4, and a Tg of 420°C.

### [Example 3]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 34.931 g (0.100 mol) of 9,9-bis(4-aminophenyl)fluorene (manufactured by JFE Chemical Corporation) as a diamine component, 55.96 g of γ-butyrolactone (manufactured by Mitsubishi Chemical Corporation) as an organic solvent, and 0.507 g of triethylamine (manufactured by Kanto Chemical Co., Inc.) as an imidation catalyst, and the resultant mixture was stirred at the number of revolutions of 200 rpm in a nitrogen gas atmosphere at a temperature of 70°C inside the system to obtain a solution. 11.236 g (0.050 mol) of 1,2,4,5-cyclohexanetetracarboxylic dianhydride (manufactured by Mitsubishi Gas Chemical Company, Inc.) and 10.933 g (0.050 mol) of pyromellitic anhydride (manufactured by Daicel Corporation) as a tetracarboxylic dianhydride component and 13.99 g of γ-butyrolactone (manufactured by Mitsubishi Chemical Corporation) as an organic solvent were added simultaneously to the obtained solution were charged, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 144.53 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (C) having a solid content concentration of 20% by mass.

Subsequently, the polyimide resin solution (C) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 70 µm. An FT-IR analysis made with respect to the obtained polyimide film has confirmed disappearance of the raw material peaks and appearance of a peak deriving from an imide skeleton. This polyimide film had a tensile modulus of 2.3 GPa, a tensile strength of 81 MPa, a total light transmittance of 85.3%, a transmittance of 0.0% at a wavelength of 400 nm, a transmittance of 0.0% at a wavelength of 350 nm, a YI value of 73.2, and a Tg of 456°C.

### [Example 4]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 24.392 g (0.070 mol) of 9,9-bis(4-aminophenyl)fluorene (manufactured by JFE Chemical Corporation) as a diamine component, 50.26 g of γ-butyrolactone (manufactured by Mitsubishi Chemical Corporation) as an organic solvent, and 3.542 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 26.907 g (0.070 mol) of cyclopentanonebisspironorbomanetetracarboxylic dianhydride (manufactured by JXTG Nippon Oil & Energy Corporation) as a tetracarboxylic dianhydride component and 12.57 g of N,N-dimethylacetamide (manufactured by Mitsubishi Gas Chemical Company, Inc.) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 132.69 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (D) having a solid content concentration of 20% by mass.

Subsequently, the polyimide resin solution (D) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 72 µm. An FT-IR analysis made with respect to the obtained polyimide film has confirmed disappearance of the raw material peaks and appearance of a peak deriving from an imide skeleton. This polyimide film had a tensile modulus of 2.0 GPa, a tensile strength of 78 MPa, a total light transmittance of 90.0%, a transmittance of 86.8% at a wavelength of 400 nm, a transmittance of 80.4% at a wavelength of 350 nm, a YI value of 1.7, and a Tg of >500°C.

### [Example 5]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 24.284 g (0.070 mol) of 9,9-bis(4-aminophenyl)fluorene (manufactured by JFE Chemical Corporation) as a diamine component, 44.57 g of γ-butyrolactone (manufactured by Mitsubishi Chemical Corporation) as an organic solvent, and 3.526 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 13.394 g (0.035 mol) of cyclopentanonebisspironorbomanetetracarboxylic dianhydride (manufactured by JXTG Nippon Oil & Energy Corporation) and 7.811 g (0.035 mol) of 1,2,4,5-cyclohexanetetracarboxylic dianhydride (manufactured by Mitsubishi Gas Chemical Company, Inc.) as a tetracarboxylic dianhydride component and 11.14 g of N,N-dimethylacetamide (manufactured by Mitsubishi Gas Chemical Company, Inc.) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 116.57 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (E) having a solid content concentration of 20% by mass.

Subsequently, the polyimide resin solution (E) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 72 µm. An FT-IR analysis made with respect to the obtained polyimide film has confirmed disappearance of the raw material peaks and appearance of a peak deriving from an imide skeleton. This polyimide film had a tensile modulus of 2.2 GPa, a tensile strength of 93 MPa, a total light transmittance of 90.0%, a transmittance of 85.9% at a wavelength of 400 nm, a transmittance of 78.6% at a wavelength of 350 nm, a YI value of 1.7, and a Tg of 452°C.

### [Example 6]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 18.394 g (0.053 mol) of 9,9-bis(4-aminophenyl)fluorene (manufactured by JFE Chemical Corporation) and 2.802 g (0.013 mol) of 2,2'-dimethylbenzidine (manufactured by Wakayama Seika Kogyo Co., Ltd.) as a diamine component, 45.61 g of γ-butyrolactone (manufactured by Mitsubishi Chemical Corporation) as an organic solvent, and 3.339 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 25.364 g (0.066 mol) of cyclopentanonebisspironorbomanetetracarboxylic dianhydride (manufactured by JXTG Nippon Oil & Energy Corporation) as a tetracarboxylic dianhydride component and 11.40 g of N,N-dimethylacetamide (manufactured by Mitsubishi Gas Chemical Company, Inc.) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for 5 hours to obtain a polyimide resin solution. Then, the temperature inside the reaction system was lowered to 120°C and then 120.06 g of N,N-dimethylacetamide (manufactured by Mitsubishi Gas Chemical Company, Inc.) was added to the solution, and the resultant mixture was stirred for about 3 hours so as to make the mixture uniform, thereby obtaining a polyimide resin solution (F) having a solid content concentration of 20% by mass.

Subsequently, the polyimide resin solution (F) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 72 µm. An FT-IR analysis made with respect to the obtained polyimide film has confirmed disappearance of the raw material peaks and appearance of a peak deriving from an imide skeleton. This polyimide film had a tensile modulus of 2.2 GPa, a tensile strength of 83 MPa, a total light transmittance of 87.6%, a transmittance of 86.6% at a wavelength of 400 nm, a transmittance of 81.9% at a wavelength of 350 nm, a YI value of 1.7, and a Tg of 443°C.

### [Example 7]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 29.967 g (0.086 mol) of 9,9-bis(4-aminophenyl)fluorene (manufactured by JFE Chemical Corporation) as a diamine component, 71.52 g of N-methyl-2-pyrrolidone (manufactured by Mitsubishi Chemical Corporation) as an organic solvent, and 0.435 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 16.528 g (0.043 mol) of cyclopentanonebisspironorbomanetetracarboxylic dianhydride (manufactured by JXTG Nippon Oil & Energy Corporation) and 12.651 g (0.043 mol) of 3,3',4,4'-biphenyltetracarboxylic acid (manufactured by Mitsubishi Chemical Corporation) as a tetracarboxylic dianhydride component and 17.88 g of N-methyl-2-pyrrolidone (manufactured by Mitsubishi Chemical Corporation) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for one hour to obtain a polyimide resin solution. Then, the temperature inside the reaction system was lowered to 120°C and then 136.61 g of N-methyl-2-pyrrolidone (manufactured by Mitsubishi Chemical Corporation) was added to the solution, and the resultant mixture was stirred for about 3 hours so as to make the mixture uniform, thereby obtaining a polyimide resin solution (G) having a solid content concentration of 20% by mass.

Subsequently, the polyimide resin solution (G) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 32 µm. An FT-IR analysis made with respect to the obtained polyimide film has confirmed disappearance of the raw material peaks and appearance of a peak deriving from an imide skeleton. This polyimide film had a tensile modulus of 2.5 GPa, a tensile strength of 107 MPa, a total light transmittance of 89.2%, a transmittance of 8.4% at a wavelength of 400 nm, a transmittance of 0.0% at a wavelength of 350 nm, a YI value of 8.9, and a Tg of 468°C.

### [Example 8]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 29.867 g (0.086 mol) of 9,9-bis(4-aminophenyl)fluorene (manufactured by JFE Chemical Corporation) as a diamine component, 73.32 g of N-methyl-2-pyrrolidone (manufactured by Mitsubishi Chemical Corporation) as an organic solvent, and 0.434 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 23.063 g (0.060 mol) of cyclopentanonebisspironorbomanetetracarboxylic dianhydride (manufactured by JXTG Nippon Oil & Energy Corporation) and 7.565 g (0.026 mol) of 3,3',4,4'-biphenyltetracarboxylic acid (manufactured by Mitsubishi Chemical Corporation) as a tetracarboxylic dianhydride component and 18.331 g of N-methyl-2-pyrrolidone (manufactured by Mitsubishi Chemical Corporation) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for one hour and 40 minutes to obtain a polyimide resin solution. Then, the temperature inside the reaction system was lowered to 120°C and then 140.40 g of N-methyl-2-pyrrolidone (manufactured by Mitsubishi Chemical Corporation) was added to the solution, and the resultant mixture was stirred for about 3 hours so as to make the mixture uniform, thereby obtaining a polyimide resin solution (H) having a solid content concentration of 20% by mass.

Subsequently, the polyimide resin solution (H) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 27 µm. An FT-IR analysis made with respect to the obtained polyimide film has confirmed disappearance of the raw material peaks and appearance of a peak deriving from an imide skeleton. This polyimide film had a tensile modulus of 2.3 GPa, a tensile strength of 91 MPa, a total light transmittance of 89.6%, a transmittance of 26.1% at a wavelength of 400 nm, a transmittance of 0.0% at a wavelength of 350 nm, a YI value of 5.0, and a Tg of 470°C.

### [Example 9]

Into a 300 mL five-neck round bottom flask equipped with a stainless steel agitating blade in a half-moon shape, a nitrogen gas introducing pipe, a Dean-Stark having a condenser attached, a thermometer, and a glass end cap, 29.867 g (0.086 mol) of 9,9-bis(4-aminophenyl)fluorene (manufactured by JFE Chemical Corporation) as a diamine component, 70.97 g of N-methyl-2-pyrrolidone (manufactured by Mitsubishi Chemical Corporation) as an organic solvent, and 0.434 g of triethylamine (manufactured by Kanto Chemical Co., Inc.) as an imidation catalyst were charged, and the resultant mixture was stirred at the number of revolutions of 200 rpm in a nitrogen gas atmosphere at a temperature of 70°C inside the system to obtain a solution. 23.063 g (0.060 mol) of cyclopentanonebisspironorbornanetetracarboxylic dianhydride (manufactured by JXTG Nippon Oil & Energy Corporation) and 5.609 g (0.026 mol) of pyromellitic anhydride (manufactured by Daicel Corporation) as a tetracarboxylic dianhydride component and 17.74 g of N-methyl-2-pyrrolidone (manufactured by Mitsubishi Chemical Corporation) as an organic solvent were added simultaneously to the obtained solution, and then the resultant mixture was heated using a mantle heater and the temperature inside the reaction system was increased to 190°C over about 20 minutes. While trapping the component distilled off and controlling the number of revolutions according to an increase of the viscosity, the temperature inside the reaction system was maintained at 190°C under reflux for one hour and 40 minutes to obtain a polyimide resin solution. Then, the temperature inside the reaction system was lowered to 120°C and then 135.51 g of N-methyl-2-pyrrolidone (manufactured by Mitsubishi Chemical Corporation) was added to the solution, and the resultant mixture was stirred for about 3 hours so as to make the mixture uniform, thereby obtaining a polyimide resin solution (I) having a solid content concentration of 20% by mass.

Subsequently, the polyimide resin solution (I) was applied onto a glass substrate, and maintained at 60°C for 30 minutes and at 100°C for one hour to cause the solvent to volatilize, obtaining a colorless, transparent primary-dried film having self-supporting properties. Further, the resultant film was fixed to a stainless steel frame and dried in a nitrogen gas atmosphere at 280°C for 2 hours to remove the solvent, obtaining a polyimide film having a thickness of 40 µm. An FT-IR analysis made with respect to the obtained polyimide film has confirmed disappearance of the raw material peaks and appearance of a peak deriving from an imide skeleton. This polyimide film had a tensile modulus of 2.4 GPa, a tensile strength of 98 MPa, a total light transmittance of 88.6%, a transmittance of 6.9% at a wavelength of 400 nm, a transmittance of 0.1% at a wavelength of 350 nm, a YI value of 33.3, and a Tg of 488°C.

In the present Examples, a solid content concentration and a thickness of a film were determined as follows.

### (1) Solid content concentration:

The measurement of a solid content concentration of a polyimide resin was conducted by heating a sample in a small-size electric furnace "MMF-1", manufactured by AS ONE Corporation, at 300°C for 30 minutes and calculating a solid content concentration from a difference between the weights of the sample before and after the heating.

### (2) Thickness of a film:

The measurement of a thickness of a film was conducted using a micrometer, manufactured by Mitutoyo Corporation.

With respect to the obtained polyimide films, the above-mentioned evaluation was conducted by the methods described below. The results are shown in Table 1 below.

### (1) Transmittance at 400 nm and 350 nm

Using an ultraviolet-visible-near infrared spectrophotometer "UV-3100PC", manufactured by Shimadzu Corporation, the measurement was conducted.

### (2) Tensile modulus and tensile strength

In accordance with ASTM-882-88, the measurement was conducted using "Strograph VC-1", manufactured by Toyo Seiki Seisaku-Sho, Ltd.

### (3) Total light transmittance and YI

In accordance with JIS K7361-1, the measurement was conducted using a color/turbidity simultaneously measuring instrument "COH 400", manufactured by Nippon Denshoku Industries Co., Ltd.

### (4) Glass transition temperature (Tg)

A glass transition temperature was determined by a DSC method. Using a differential scanning calorimeter "DSC 6200", manufactured by SII Nano Technology Inc., the DSC measurement was conducted under conditions at a temperature increase rate of 10°C/minute, determining a glass transition temperature.

### (5) 5% Weight loss temperature

Using a differential calorimetry/differential thermogravimetry simultaneously measuring apparatus "TG/DTA 6200", manufactured by SII Nano Technology Inc., a sample was heated from 35 to 300°C at a temperature increase rate of 10°C/minute, and then cooled to 100°C, and further heated from 100 to 500°C at a temperature increase rate of 10°C/minute, determining a 5% weight loss temperature.

**Table 1**

| | | Example 1 | Example 2 | Example 3 | Example 4 | Example 5 | Example 6 | Example 7 | Example 8 | Example 9 |
|---|---|---|---|---|---|---|---|---|---|---|
| Polyimide resin formulation | Structural unit A (Figures in brackets at lower portion indicate molar ratio) | (A-3) | (A-3) | (A-2)/(A-3) [= 1/1] | (A-1) | (A-1)/(A-3) [= 1/1] | (A-1) | (A-1)/(A-4-1) [= 1/1] | (A-1)/(A-4-1) [=7/3] | (A-1)/(A-2) [=7/3] |
| | Structural unit B (Figures in brackets at lower portion indicate molar ratio) | (B-1) | (B-1)/(B-2) [= 4/1] | (B-1) | (B-1) | (B-1) | (B-1)/(B-2) [= 4/1] | (B-1) | (B-1) | (B-1) |
| Glass transition temperature (°C) | | 437 | 420 | 456 | >500 | 452 | 443 | 468 | 470 | 488 |
| Total light transmission (%) | | 89.8 | 90.0 | 85.3 | 90.0 | 90.0 | 87.6 | 89.2 | 89.6 | 88.6 |
| YI | | 1.8 | 1.4 | 73.2 | 1.7 | 1.7 | 1.7 | 8.9 | 5.0 | 33.3 |
| Tensile strength (MPa) | | 60 | 102 | 81 | 78 | 93 | 83 | 107 | 91 | 98 |
| Tensile modulus (GPa) | | 2.6 | 2.9 | 2.3 | 2.0 | 2.2 | 2.2 | 2.5 | 2.3 | 2.4 |
| 5% Weight loss temperature (°C) | | >500 | >500 | >500 | >500 | >500 | >500 | >500 | >500 | >500 |

## Claims

1. A polyimide resin comprising a structural unit A derived from a tetracarboxylic dianhydride and a structural unit B derived from a diamine compound,
wherein the structural unit A comprises at least one of a structural unit (A-1) derived from a compound represented by the following formula (a-1), a structural unit (A-2) derived from a compound represented by the following formula (a-2), and a structural unit (A-3) derived from a compound represented by the following formula (a-3),
the structural unit B comprises a structural unit (B-1) derived from a compound represented by the following formula (b-1),
a proportion of the structural unit (B-1) in the structural unit B is 60 mol% or more, and
the polyimide resin has a glass transition temperature of higher than 410°C: 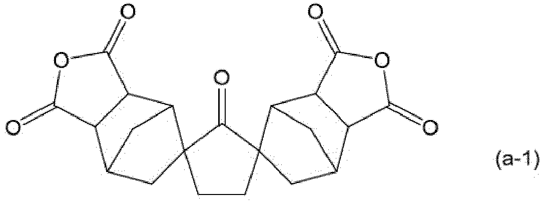 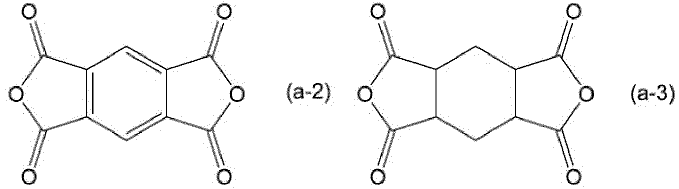 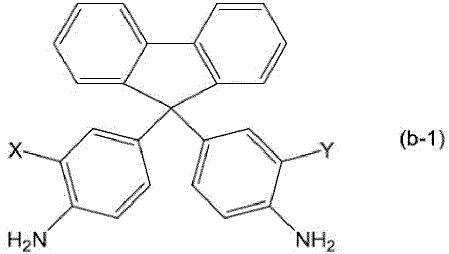 wherein X and Y in the formula (b-1) each independently are a hydrogen atom, a methyl group, a chlorine atom, or a fluorine atom.

2. The polyimide resin according to claim 1, wherein the structural unit B further comprises a structural unit (B-2) derived from a compound represented by the following formula (b-2):

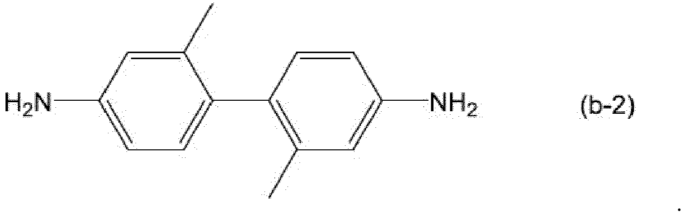

3. The polyimide resin according to claim 1 or 2, wherein the structural unit A further comprises a structural unit (A-4) derived from a compound represented by the following formula (a-4):

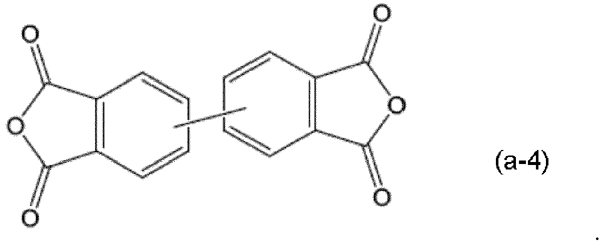

4. A polyimide film comprising a cured product of the polyimide resin according to any one of claims 1 to 3.
